# EUROPÄISCHE PATENTSCHRIFT

(11) **EP 2 718 359 B1**
(45) Veröffentlichungstag und Bekanntmachung des Hinweises auf die Patenterteilung: **15.01.2020**
(21) Anmeldenummer: 12729419.7
(22) Anmeldetag: 08.06.2012
(51) Int. Cl.: C08K 5/00, C08K 5/07, C08K 5/092, C09D 129/04, B65D 65/42

(54) **VERFAHREN ZUM HERSTELLEN EINES BESCHICHTETEN VERPACKUNGSMATERIALS UND VERPACKUNGSMATERIAL MIT WENIGSTENS EINER SPERRSCHICHT FÜR HYDROPHOBE VERBINDUNGEN**
METHOD FOR PRODUCING A COATED PACKAGING MATERIAL AND PACKAGING MATERIAL WITH AT LEAST ONE BARRIER LAYER FOR HYDROPHOBIC CONNECTIONS
PROCÉDÉ DE FABRICATION D'UN MATÉRIAU D'EMBALLAGE REVÊTU ET MATÉRIAU D'EMBALLAGE DOTÉ D'AU MOINS UNE COUCHE D'ARRÊT POUR LIAISONS HYDROPHOBES

(30) Priorität: 10.06.2011 EP 11169454
(43) Veröffentlichungstag der Anmeldung: 16.04.2014
(73) Patentinhaber: Mayr-Melnhof Karton AG, 1041 Wien (AT)
(72) Erfinder: ZISCHKA, Michael, A-8046 Stattegg-Mühl (AT); SPANRING, Julia, A-8020 Graz (AT); REISCHL, Martin, A-8113 Stallhofen (AT)
(74) Vertreter: Hofstetter, Schurack & Partner
(86) Internationale Anmeldenummer: PCT/EP2012/060902
(87) Internationale Veröffentlichungsnummer: WO 2012/168433

(56) Entgegenhaltungen:
- EP-A1- 0 718 437
- DE-A1-102005 056 574
- DE-T2- 69 532 378
- US-A- 5 989 724

## Beschreibung

Die Erfindung betrifft ein Verfahren zum Herstellen eines beschichteten Verpackungsmaterials sowie ein Verpackungsmaterial mit wenigstens einer Sperrschicht für hydrophobe Verbindungen.

Ein kürzlich bekannt gewordenes Problem bei Verpackungen auf Cellulose-Basis ist der Übergang (Migration) von Mineralölbestandteilen aus dem Verpackungsmaterial in das Verpackungsgut. Bei Verpackungsmaterialien auf Cellulose-Basis stammen die Mineralölbestandteile dabei überwiegend aus Zeitungs- und Verpackungsdruckfarben von altpapierbasiertem Recyclingmaterial, welches in der Verpackungswirtschaft aus ökologischen Gründen in stetig wachsendem Umfang verwendet wird. Die im Recyclingmaterial vorhandenen Mineralölbestandteile können sich unter Umständen in Verpackungsgut anreichern, das ohne zusätzliche Umverpackung im Verpackungsmaterial gelagert wird.

Aus dem Stand der Technik sind verschiedene Verpackungsmaterialien mit Sperrschichten gegen hydrophobe Verbindungen bekannt. Beispielsweise offenbart die DE 695 32 378 T2 ein Cellulosefasergewebe, welches als Sperrschicht eine Schicht aufweist, die eine kontinuierliche Anordnung von zufällig ausgerichteten Cellulosefasern sowie eine Cyclodextrin umfassende Schicht besitzt, wobei die Cyclodextrin umfassende Schicht ihrerseits als Sperrschicht oder Fangstelle gegenüber der Passage von permeierenden hydrophoben Verbindungen - wie beispielsweise von Mineralölen, aromatischen Kohlenwasserstoffen, Druckfarben und dergleichen - fungiert.

Aus der DE 102005056574 A1 ist eine Nahrungsmittelhülle aus einem ein- oder beidseitig mit Acrylharz beschichteten, flächenförmigen Fasergebilde bekannt. Das Acrylharz ist mit mindestens einem anderen natürlichen und/oder synthetischen Polymer kombiniert. Das Acrylharz in der Beschichtung kann mit dem anderen Polymer abgemischt sein. Letzteres kann auch eine eigene Schicht bilden. Verwendet wird die Hülle vor allem als künstliche Wursthülle, speziell für geräucherte Brühwurst.

Die US 5989724 A1 offenbart ein beschichtetes Papiermaterial, vorzugsweise zur Verwendung als Rieseinschlag, umfassend ein Substrat, das auf mindestens einer Oberfläche mit einer Grundschicht und mit mindestens einer zusätzlichen Überzugsschicht über dem Basislack beschichtet ist. Beide Schichten sind wässrige Dispersionen eines Polymers aus der Gruppe bestehend aus Acrylpolymeren, Acryl-Copolymeren, Polyvinylacetat, Polyvinylalkohol, EthylenVinylacetat, Polyvinylchlorid, Styrol-Butadien-Copolymeren, Polyvinylidenchlorid und dessen Copolymeren oder Stärke. Entsprechendes geht auch aus der EP 0718437 A1 hervor.

Aus der EP 1 884 594 A1 geht ein migrationsbeständiges Papier hervor, welches unter anderem mit PVOH beschichtet sein kann.

Aus der US 2010/0112226 A1 sind Papiersubstrate zu entnehmen, die durch Curtain-Coating mit Hydroxygruppen-enthaltenden Polymeren beschichtet werden, um eine Barriereschicht auszubilden. Die dabei verwendeten Dispersionen sind frei von Tensiden und weisen mindestens ein organisches Lösungsmittel auf, sodass der Siedepunkt der Dispersion unter 100°C liegt.

Als nachteilig an dem bekannten Verpackungsmaterial ist der Umstand anzusehen, dass dieses vergleichsweise teuer und aufwendig in der Herstellung ist.

Aufgabe der Erfindung ist es, ein einfacher und kostengünstiger durchführbares Verfahren zur Herstellung eines Verpackungsmaterials auf Cellulose-Basis mit einer Sperrschicht für hydrophobe Verbindungen bereitzustellen. Eine weitere Aufgabe der Erfindung ist es, ein einfacher und kostengünstiger herstellbares Verpackungsmaterial auf Cellulose-Basis mit einer Sperrschicht für hydrophobe Verbindungen bereitzustellen.

Die Aufgaben werden erfindungsgemäß durch ein Verfahren gemäß Anspruch 1 zum Herstellen eines beschichteten Verpackungsmaterials sowie durch ein Verpackungsmaterial gemäß Anspruch 11 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen des Verpackungsmaterials und umgekehrt anzusehen sind.

Ein erfindungsgemäßes Verfahren zum Herstellen eines beschichteten Verpackungsmaterials umfasst zumindest die Schritte a) Bereitstellen eines Substrats, welches ein Basismaterial aus Cellulose, eine einem Verpackungsgut abzuwendende Außenseite sowie eine dem Verpackungsgut zuzuwendende Innenseite aufweist, wobei das Basismaterial gestrichenes oder ungestrichenes Papier, gestrichener oder ungestrichener Karton oder gestrichene oder ungestrichene Pappe ist, b) Beschichten der Innenseite des Substrats mit wenigstens einer Schicht aus einer wässrigen Zusammensetzung, welche zumindest Polyvinylalkohol und ein Vernetzungsmittel umfasst und einen Feststoffgehalt von höchstens 25 Gew.-% aufweist, wobei als Vernetzungsmittel wenigstens ein Alkylorthosilikat und/oder wenigstens eine olefinisch gesättigte und/oder ungesättigte bi-, tri- oder multifunktionelle Verbindung, die mit den Hydroxy-Gruppen des Polyvinylalkohols reagieren kann und zumindest zwei funktionellen Gruppen ausgewählt aus Carbonsäure und Säureanhydrid aufweist, verwendet wird, und c) Trocknen der Schicht und Vernetzen des Polyvinylalkohols mithilfe des Vernetzungsmittels unter Ausbildung einer Sperrschicht für hydrophobe Verbindungen. Im Rahmen der vorliegenden Erfindung sind prozentuale Angaben grundsätzlich als Gewichtsprozente zu verstehen, sofern nichts Gegenteiliges angegeben ist. Unter Polyvinylalkohol wird im Rahmen der Erfindung ein thermoplastischer Kunststoff verstanden, welcher zumindest überwiegend aus Kopf-Kopf- und/oder Kopf-Schwanz-verknüpften Monomeren der allgemeinen Formel 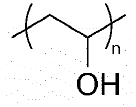 besteht. Im Rahmen der Erfindung verwendbare Polyvinylalkohole sind beispielsweise durch die an sich bekannte Hydrolyse von Polyvinylestern, insbesondere von Polyvinylacetat, zugänglich. Gängige Handelsnamen von zur Durchführung der Erfindung geeigneten Polyvinylalkoholen sind beispielsweise Elvanol, Gohsenol, Polyviol, Poval oder Mowiol. Unter einem Vernetzungsmittel werden im Rahmen der Erfindung Verbindungen verstanden, welche durch Reaktion mit Polyvinylalkohol zur Ausbildung eines dreidimensionalen Netzwerks beitragen. Grundsätzlich kann als Vernetzungsmittel eine einzelne chemische Verbindung oder ein Gemisch unterschiedlicher chemischer Verbindungen verwendet werden. Geeignete Vernetzungsmittel umfassen Alkylorthosilikate und/oder bi-, tri- oder multifunktionelle Verbindungen, die mit den Hydroxy-Gruppen des Polyvinylalkohols reagieren können und zumindest zwei funktionellen Gruppen ausgewählt aus Carbonsäure und Säureanhydrid aufweisen. Die wässrige Zusammensetzung, welche auch als Strich oder Streichfarbe bezeichnet werden kann, kann grundsätzlich frei von Füllstoffen und/oder Pigmenten ausgebildet sein oder alternativ Füllstoffe und/oder Pigmente umfassen. Es ist jedoch zu betonen, dass der gesamte Feststoffgehalt der wässrigen Zusammensetzung inklusive etwaig vorhandener Füllstoffe/Pigmente immer unter 25 Gew.-% liegt, da die wässrige Zusammensetzung hierdurch als niedrig viskose Streichfarbe verwendet werden kann, die besonders hohe Auftragsgeschwindigkeiten bei gleichzeitig geringen Herstellungskosten ermöglicht. Zum Auftragen der wässrigen Zusammensetzung können beispielsweise an sich bekannte Konturstreichverfahren verwendet werden, wobei die Erfindung hinsichtlich der in Schritt b) zu verwendenden Auftragsmethoden grundsätzlich nicht beschränkt ist. Das erfindungsgemäße Verfahren kann im Unterschied zum Stand der Technik besonders einfach und kostengünstig durchgeführt werden, da lediglich kostengünstige Ausgangsmaterialien benötigt und mit Hilfe von gängigen Fabrikationsanlagen schnell und einfach verarbeitet werden können.

Durch die Vernetzung des Polyvinylalkohols wird auf der Innenseite des Verpackungsmaterials eine Sperrschicht erzeugt, welche gegenüber hydrophoben Verbindungen als Sperre und/oder Fangstelle fungiert und eine Migration dieser hydrophoben Verbindungen von der Außenseite des Verpackungsmaterials und/oder aus dem Basismaterial in den Innenraum der Verpackung vollständig oder zumindest annähernd vollständig unterbindet. Die Sperrschicht ist aufgrund der Quervernetzung des Polyvinylalkohols feuchtigkeitsbeständig, wodurch die Sperrwirkung vorteilhaft über die gesamte Lebensdauer einer aus dem erfindungsgemäßen Verpackungsmaterial gefertigten Verpackung aufrechterhalten werden kann. Darüber hinaus ist das erfindungsgemäß hergestellte Verpackungsmaterial sowohl aerob als auch anaerob abbaubar, da sowohl das Cellulose-Basismaterial als auch die Beschichtung eine hydrophile Oberfläche besitzen, die damit der bakteriellen Zersetzung zugänglich sind. Indem die Sperrschicht auf der Innenseite des Verpackungsmaterials ausgebildet wird, ist die Sperrschicht zudem besonders zuverlässig vor mechanischer Beschädigung beim Transport oder während der Lagerung einer aus dem erfindungsgemäßen Verpackungsmaterial gebildeten Verpackung geschützt. Das über das erfindungsgemäße Verfahren hergestellte Verpackungsmaterial garantiert aufgrund seiner Barrierewirkung gegenüber hydrophoben Verbindungen - wie etwa Mineralölbestandteilen aus Recyclingmaterial oder Mineralölbestandteilen aus Aufdrucken - zudem beispielsweise die Lebensmittelsicherheit des Verpackungsguts. Gleichzeitig erhält es die ökologischen Vorteile einer altpapierbasierten Verpackungswirtschaft und gewährleistet die Recyclierbarkeit des beschichteten Basismaterials.

In einer vorteilhaften Ausgestaltung der Erfindung ist vorgesehen, dass ein Basismaterial mit einer flächenbezogenen Masse zwischen 5 g/m² und 2000 g/m², insbesondere zwischen 100 g/m² und 1000 g/m² und bevorzugt zwischen 200 g/m² und 800 g/m² verwendet wird. Hierdurch kann das Verpackungsmaterial besonders flexibel an unterschiedliche Anwendungszwecke angepasst werden. Wenn das Basismaterial eine flächenbezogene Masse zwischen etwa 5 g/m² und etwa 150 g/m² aufweist, wird es im Rahmen der Erfindung als Papier bezeichnet. Basismaterial mit einer flächenbezogenen Masse zwischen etwa 150 g/m² und 800 g/m² wird im Rahmen der Erfindung als Karton bezeichnet, während Basismaterial mit einer flächenbezogenen Masse zwischen etwa 800 g/m² und 2000 g/m² als Pappe bezeichnet wird.

Weitere Vorteile ergeben sich, wenn ein Polyvinylalkohol mit einem Hydrolysegrad zwischen 75 % und 100 %, insbesondere zwischen 80 % und 99,9 % und/oder einem Polymerisationsgrad zwischen 500 und 3000 verwendet wird. Unter einem Hydrolysegrad zwischen 75 % und 100 % werden im Rahmen der Erfindung Hydrolysegrade von 75 %, 76 %, 77 %, 78 %, 79 %, 80 %, 81 %, 82 %, 83 %, 84 %, 85 %, 86 %, 87 %, 88 %, 89 %, 90 %, 91 %, 92 %, 93 %, 94 %, 95 %, 96 %, 97 %, 98 %, 99 % oder 100 % sowie entsprechende Zwischenwerte verstanden. Unter einem Polymerisationsgrad zwischen 500 und 3000 werden im Rahmen der Erfindung Polymerisationsgrade zwischen 500, 550, 600, 650, 700, 750, 800, 850, 900, 950, 1000, 1050, 1100, 1150, 1200, 1250, 1300, 1350, 1400, 1450, 1500, 1550, 1600, 1650, 1700, 1750, 1800, 1850, 1900, 1950, 2000, 2050, 2100, 2150, 2200, 2250, 2300, 2350, 2400, 2450, 2500, 2550, 2600, 2650, 2700, 2750, 2800, 2850, 2900, 2950 oder 3000 sowie entsprechende Zwischenwerte verstanden. Grundsätzlich kann zur Herstellung einer Sperrschicht auch ein Gemisch von Polyvinylalkoholen mit unterschiedlichen Hydrolyse- und/oder Polymerisationsgraden verwendet werden. Über den Hydrolysegrad und Polymerisationsgrad können die chemischen und physikalischen Eigenschaften der Sperrschicht exakt an den jeweiligen Anwendungszweck des Verpackungsmaterials sowie an das zum Auftragen der wässrigen Zusammensetzung verwendete Auftragsverfahren angepasst werden. Durch die Variation des Hydrolysegrads und/oder des Polymerisationsgrads können beispielsweise die Porosität, die Löslichkeit und die Kristallinität der Schicht nach dem Bedarf der Anwendung eingestellt werden. Dadurch lassen sich insbesondere die Flexibilität und die Dehnbarkeit der resultierenden Sperrschicht optimal an die jeweiligen Anforderungen anpassen.

In weiterer vorteilhafter Ausgestaltung der Erfindung weist die wässrige Zusammensetzung einen Feststoffgehalt von höchstens 15 Gew.-% auf, wenn sie frei von Füllstoffen und/oder Pigmenten ausgebildet ist. Insbesondere weist die wässrige Zusammensetzung einen Feststoffgehalt von 15%, 14%, 13%, 12%, 11%, 10%, 9%, 8%, 7%, 6%, 5%, 4%, 3%, 2% oder 1 % auf, wenn sie frei von Füllstoffen und/oder Pigmenten ausgebildet ist. Hierdurch wird eine besonders niedrige Viskosität erreicht, welche entsprechend hohe Auftragsgeschwindigkeiten erlaubt. Alternativ ist vorgesehen, dass die wässrige Zusammensetzung einen Feststoffgehalt von höchstens 25 Gew.-% besitzt, wenn sie Füllstoffe und/oder Pigmente umfasst. Hierdurch ist weiterhin eine hohe Auftragsgeschwindigkeit ermöglicht, wobei mit Hilfe der Füllstoffe und/oder Pigmente zusätzliche Eigenschaften des Verpackungsmaterials einstellbar sind. Beispielsweise können mit Hilfe von Füllstoffen und/oder Pigmenten die Durchsichtigkeit, Farbe, Oberflächenbeschaffenheit oder Rohdichte des Strichs gezielt verändert werden.

Weitere Vorteile ergeben sich, indem eine wässrige Zusammensetzung mit einem Feststoffgehalt zwischen 3 Gew.-% und 25 Gew.-%, insbesondere zwischen 10 Gew.-% und 22 Gew.-%, verwendet wird. Unter einem Feststoffgehalt zwischen 3 Gew.-% und 25 Gew.-% sind insbesondere Feststoffgehalte von 3 Gew.-%, 4 Gew.-%, 5 Gew.-%, 6 Gew.-%, 7 Gew.-%, 8 Gew.-%, 9 Gew.-%, 10 Gew.-%, 11 Gew.-%, 12 Gew.-%, 13 Gew.-%, 14 Gew.-%, 15 Gew.-%, 16 Gew.-%, 17 Gew.-% , 18 Gew.-%, 19 Gew.-%, 20 Gew.-%, 21 Gew.-%, 22 Gew.-%, 23 Gew.-%, 24 Gew.-% oder 25 Gew.-% sowie entsprechende Zwischenwerte zu verstehen. Indem die wässrige Zusammensetzung einen Feststoffgehalt zwischen 3 Gew.-% und 25 Gew.-%, insbesondere zwischen 10 Gew.-% und 22 Gew.-% aufweist, können niedrig viskose Streichfarben hergestellt werden, die sich besonders gut für den Auftrag mit Konturstreichverfahren bei hohen Auftragsgeschwindigkeiten eignen. Des Weiteren kann durch Einstellung des Feststoffgehalts die Reaktionsgeschwindigkeit der Quervernetzung vorteilhaft gesteuert werden. In Abhängigkeit des oder der verwendeten Vernetzungsmittel sowie in Abhängigkeit des gewählten Feststoffgehalts kann die Vernetzung des Polyvinylalkohols bereits während des Trocknens durchgeführt werden. Alternativ oder zusätzlich kann die Vernetzung des Polyvinylalkohols im Anschluss an die Trocknung erfolgen.

Alternativ oder zusätzlich hat es sich als vorteilhaft gezeigt, wenn eine wässrige Zusammensetzung mit einem Wassergehalt von mindestens 75 Gew.-%, insbesondere von mindestens 80 Gew.-%, verwendet wird. Unter einem Wassergehalt von mindestens 75 Gew.-% sind insbesondere Wassergehalte von 75 Gew.-%, 76 Gew.-%, 77 Gew.-%, 78 Gew.-%, 79 Gew.-%, 80 Gew.-%, 81 Gew.-%, 82 Gew.-%, 83 Gew.-%, 84 Gew.-%, 85 Gew.-%, 86 Gew.-%, 87 Gew.-%, 88 Gew.-%, 89 Gew.-%, 90 Gew.-%, 91 Gew.-%, 92 Gew.-%, 93 Gew.-%, 94 Gew.-%, 95 Gew.-%, 96 Gew.-%, 97 Gew.-%, 98 Gew.-% oder 99 Gew.-% sowie entsprechende Zwischenwerte zu verstehen. Durch die Einstellung des Feststoffgehalts und/oder des Wassergehalts auf die oben genannten Werte lassen sich Streichfarben herstellen, deren Viskositäten optimal auf das verwendete Auftragsverfahren abgestimmt sind. Zusätzlich können damit besonders gut stabilisierte Lösungen hergestellt werden, die die für die Anwendung notwendige Lagerstabilität aufweisen. Ebenso kann hierdurch die Reaktionsgeschwindigkeit der Quervernetzung des Polyvinylalkohols kontrolliert werden.

In einer weiteren vorteilhaften Ausgestaltung der Erfindung ist vorgesehen, dass als Vernetzungsmittel Tetraethylorthosilikat verwendet wird. Geeignete olefinisch gesättigte und/oder ungesättigte Vernetzungsmittel sind beispielsweise Malonsäure, Glutarsäure, Adipinsäure, Zitronensäure, Butantetracarbonsäure, Acrylsäure, Polyacrylsäure, Methacrylsäure, Maleinsäure sowie beliebige Mischungen hieraus sowie Polymerisate und/oder Copolymerisate davon. Hierdurch können die chemischen und physikalischen Eigenschaften der Sperrschicht besonders exakt an den Anwendungszweck des Verpackungsmaterials sowie an das jeweilige Beschichtungs- und Trocknungsverfahren angepasst werden. Beispielsweise kann als Vernetzer Polyacrylsäure und/oder Polymethacrylsäure (im Folgenden unter dem Begriff "Poly(meth)acrylsäure" zusammengefasst) verwendet werden, deren Säuregruppen mit den Alkohol-Gruppen des Polyvinylalkohols veresterbar sind. Grundsätzlich können natürlich auch andere Polyalkylacrylsäuren wie beispielsweise Polyethylacrylsäure verwendet werden.

Weitere Vorteile ergeben sich, indem eine wässrige Zusammensetzung verwendet wird, welche bezogen auf 100 Gewichtsanteile Polyvinylalkohol zwischen 0,01 und 55 Gewichtsanteile Vernetzungsmittel und/oder welche bezogen auf 100 Gewichtsanteile Polyvinylalkohol zwischen 1 und 60 Gewichtsanteile eines Füllstoffs und/oder eines Pigments umfasst. Unter einem Gewichtsanteil zwischen 0,01 und 60 sind insbesondere Gewichtsanteile von 0,01, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59 oder 60 sowie entsprechende Zwischenwerte zu verstehen. Indem der Gewichtsanteil des Vernetzungsmittels im genannten Bereich zwischen 0,01 und 55 Gewichtsanteilen liegt, kann der Vernetzungsgrad des Polyvinylalkohols und damit die Elastizität und die Sperreigenschaft der Sperrschicht optimal an den jeweiligen Anwendungszweck angepasst werden. Als Füllstoffe und/oder Pigmente eignen sich grundsätzlich organische, anorganische sowie organisch-anorganisch modifizierte Partikel, die mit oder ohne Quellvermögen in Wasser ausgestattet sind. Die Verwendung eines Füllstoffs und/oder Pigments erlauben unter anderem eine Anpassung des optischen Eindrucks des Verpackungsmaterials sowie eine bessere Bedruckbarkeit. Darüber hinaus bilden geeignete Füllstoffe und/oder Pigmente eine zusätzliche "mechanische" Barriere gegen den Durchtritt von hydrophoben Verbindungen. Die Sperrwirkung der Sperrschicht kann somit durch den Zusatz von Füllstoffen und/oder Pigmenten vorteilhaft gesteigert werden. Als anorganische Füllstoffe eignen sich im besonderen Kaolin, Schichtsilikate wie Montmorillonit, Bentonit, Vermiculit, Laponit, Hectorit, Saponit sowie Silika und Alumosilikate. Als organische Füllstoffe können Zellulosen - beispielsweise in Form von Fasern oder als mikro- und nanofibrillierte Zellulose - sowie andere Polysaccharide - beispielsweise Chitosan, Zellulosederivate, Hemizellulosen oder modifizierte/unmodifizierte Stärke - eingesetzt werden. Eine physikalische Vernetzung basierend auf Wasserstoffbrückenbindungen mit dem Polyvinylalkohol wird auch durch den Einsatz von Füllstoffen und Pigmenten erreicht, welche an der Oberfläche im wässrigen Milieu OH-Gruppen besitzen und/oder ausbilden können.

Weitere Vorteile ergeben sich, wenn ein Füllstoff und/oder ein Pigment verwendet wird, welches säurestabil ist und/oder zumindest im Wesentlichen sphärische und/oder plättchenförmige Partikelgeometrien aufweist. Säurestabile Füllstoffe und/oder Pigmente sind dabei insbesondere von Vorteil, wenn der Polyvinylalkohol im sauren Milieu vernetzt wird. Insbesondere ist es in diesem Fall bevorzugt, wenn die wässrige Zusammensetzung frei von säurelabilen Verbindungen wie beispielsweise Stärke oder dergleichen ist. Durch sphärische und/oder plättchenförmige Partikelgeometrien kann eine besonders hohe Sperrwirkung erzielt werden, da der zurückzulegende Weg der hydrophoben Verbindungen durch die labyrinthartige Anordnung der Füllstoffe und/oder Pigmente in der Sperrschicht erheblich verlängert wird.

Eine weitere vorteilhafte Ausgestaltung der Erfindung ist durch den Zusatz von Tensiden, Rheologiehilfsmitteln und/oder Entschäumern zur wässrigen Zusammensetzung gegeben. Dies gewährleistet die optimale Verarbeitbarkeit der wässrigen Streichfarbe mittels Konturstreichverfahren. Geeignete Tenside zur Absenkung der Oberflächenspannung der wässrigen Zusammensetzung sind beispielsweise unter dem Handelsnamen Envirogem (Air Products) kommerziell verfügbar.

In einer weiteren vorteilhaften Ausgestaltung der Erfindung ist vorgesehen, dass ein pH-Wert der wässrigen Zusammensetzung vor dem Aufbringen auf das Substrat auf einen Wert zwischen 1 und 7, insbesondere zwischen 1,5 und 3,5, eingestellt wird und/oder dass die wässrige Zusammensetzung vor dem Aufbringen auf das Substrat entgast wird. Indem der pH-Wert der wässrigen Zusammensetzung auf einen Wert von 1,0, 1,5, 2,0, 2,5, 3,0, 3,5, 4,0, 4,5, 5,0, 5,5, 6,0, 6,5 oder 7,0 bzw. auf einen entsprechenden Zwischenwert eingestellt wird, kann die Vernetzungsgeschwindigkeit des Polyvinylalkohols gezielt variiert werden. Hierdurch kann das Verfahren optimal an die Eigenschaften des verwendeten Basismaterials, an die jeweils verwendete Auftragsmethode der wässrigen Zusammensetzung sowie an das verwendete Trocknungsverfahren angepasst werden. Durch das Entgasen der wässrigen Zusammensetzung wird eine etwaige Bläschenbildung in der Sperrschicht zuverlässig verhindert und eine gleich bleibend hohe Sperrwirkung über die beschichtete Substrat-Oberfläche erzielt.

Weitere Vorteile ergeben sich, wenn eine wässrige Zusammensetzung verwendet wird, welche eine Viskosität zwischen 200 mPas und 1500 mPas besitzt. Hierdurch kann die wässrige Zusammensetzung optimal an die jeweils verwendete Auftragsmethode angepasst werden, sodass in jedem Fall eine durchgängige und gleichmäßige Schichtdicke erzielt werden kann. Eine niedrige Viskosität, insbesondere im Bereich zwischen 200 mPas und 600 mPas, ist dabei insbesondere für folgende Auftragsverfahren geeignet: Auftrag mittels Vorhangbeschichtungsverfahren, Gießen, Sprühen. Eine höhere Viskosität, insbesondere im Bereich zwischen 600 mPas und 1500 mPas, erlaubt demgegenüber einen verbesserten Auftrag mittels Rakel, Klinge und/oder Filmpresse. Bei der Verwendung von Vorhangbeschichtungsverfahren ist es bevorzugt, wenn keine mehrschichtigen Beschichtungsvorhänge verwendet werden. Hierdurch ist es möglich, überschüssige wässrige Zusammensetzung einfach aufzufangen und für einen erneuten Beschichtungsdurchgang zu verwenden, ohne dass es zu einer unerwünschten Durchmischung von wässrigen Zusammensetzungen unterschiedlicher Zusammensetzung kommen kann.

Weitere Vorteile ergeben sich, wenn die wässrige Zusammensetzung derart auf das Substrat aufgebracht wird, dass sich eine flächenbezogenen Trockenmasse zwischen 1 g/m² und 20 g/m², insbesondere zwischen 3 g/m² und 15 g/m², ergibt. Unter einer flächenbezogenen Trockenmasse zwischen 1 g/m² und 20 g/m² sind im Rahmen der Erfindung insbesondere flächenbezogenen Trockenmassen von 1 g/m², 2 g/m², 3 g/m², 4 g/m², 5 g/m², 6 g/m², 7 g/m², 8 g/m², 9 g/m², 10 g/m², 11 g/m², 12 g/m², 13 g/m², 14 g/m², 15 g/m², 16 g/m², 17 g/m², 18 g/m², 19 g/m² oder 20 g/m² sowie entsprechende Zwischenwerte zu verstehen. Hierdurch kann die Sperrwirkung der Sperrschicht an unterschiedlich mit hydrophoben Verbindungen belastete Basismaterialien oder Verpackungssituationen angepasst werden. Für gering belastete Basismaterialien oder für Verpackungsmaterial, das voraussichtlich geringen Mengen hydrophober Verbindungen ausgesetzt sein wird, genügen entsprechend geringere Auftragsmengen. Umgekehrt können größere Auftragsmengen verwendet werden, um die Sperrwirkung der Sperrschicht entsprechend zu vergrößern. Daneben kann die Auftragsmenge in Abhängigkeit der verwendeten Auftragsmethode variiert werden, um eine gleichmäßige Sperrschicht mit einer ausreichend hohen Sperrwirkung zu erzeugen. Wegen der Quervernetzung des Polyvinylalkohols genügen dabei im Unterschied zum Stand der Technik grundsätzlich deutlich geringere Auftragsmengen, um eine ausreichende Sperrwirkung zu erzielen. Hierdurch ergeben sich insbesondere bei einem Massenartikel wie Verpackungsmaterial erhebliche Kosteneinsparungen. Darüber hinaus ist es im Unterschied zum Stand der Technik grundsätzlich nicht erforderlich, komplexe mehrschichtige Schichtsysteme auf der Oberfläche des Substrats auszubilden, um eine ausreichende Sperrwirkung sicherzustellen.

Alternativ oder zusätzlich kann vorgesehen sein, dass die wässrige Zusammensetzung derart auf das Substrat aufgebracht wird, dass die Schicht eine Nassfilmdicke zwischen 1 µm und 1000 µm, insbesondere zwischen 10 µm und 200 µm, aufweist. Hierdurch kann die wässrige Zusammensetzung insbesondere in Abhängigkeit der Wasseraufnahmefähigkeit des jeweiligen Basismaterials gleichmäßig aufgebracht und entsprechend gleichmäßig getrocknet werden. Darüber hinaus werden unnötige Verluste an wässriger Zusammensetzung während des Beschichtens vermieden, sodass die Sperrschicht auf diese Weise besonders wirtschaftlich und mit einer gleich bleibend hohen Güte hergestellt werden kann.

In einer weiteren vorteilhaften Ausgestaltung der Erfindung ist vorgesehen, dass die wässrige Zusammensetzung mittels eines egalisierenden Streichverfahrens, insbesondere mittels Rakel, Klinge und/oder Filmpresse, und/oder mittels eines Konturstreichverfahrens, insbesondere mittels Gießen, Sprühen, Vorhangbeschichten und/oder Luftbürste, auf das Substrat aufgebracht wird. Die Verwendung eines egalisierenden Streichverfahrens erlaubt eine Materialglättung und ist insoweit besonders zweckmäßig, als dass gegebenenfalls anschließende kontaktlose Auftragsverfahren die Kontur der Oberfläche des Substrats weitgehend erhalten. Dies bedeutet, dass eine raue Oberflächenkontur des Basismaterials bzw. des Substrats mithilfe eines egalisierenden Streichverfahrens ausgeglichen und damit geglättet wird. Es wird in der Regel eine umso höhere Produktqualität erreicht, je glatter die Materialbahn ist. In diesem Zusammenhang hat sich herausgestellt, dass es für die meisten Anwendungen vorteilhafter ist, das Substrat erst zu glätten und dann die Sperrschicht anzubringen als eine raue Kontur der Sperrschicht nachträglich glätten. Durch die Verwendung von egalisierenden oder nivellierenden Streichverfahren kann zusammenfassend auf rauen Substraten eine glatte Oberfläche erzeugt werden. Diese glatte Oberfläche eignet sich dann besonders für eine nachfolgende Anwendung von Konturstreichverfahren.

Die Verwendung von Konturstreichverfahren bietet den grundsätzlichen Vorteil, dass an der Kontaktstelle zwischen Basismaterial und wässriger Zusammensetzung kein Druck ausgeübt wird, sodass ein tiefes Eindringen der wässrigen Zusammensetzung in das Basismaterial vermieden wird. Hierdurch können besonders gleichmäßige Sperrschichten hergestellt werden. Gleichzeitig werden besonders geringe Auftragsmengen an wässriger Zusammensetzung benötigt, um eine gewünschte Sperrschichtwirkung zu erzielen, wodurch das Verfahren besonders wirtschaftlich durchgeführt werden kann.

Weitere Vorteile ergeben sich, wenn das beschichtete Substrat in Schritt c) auf eine Restfeuchte zwischen 3 % und 10 %, insbesondere zwischen 5 % und 7 %, im Basismaterial getrocknet wird. Durch eine Restfeuchte im Bereich von 3 %, 4 %, 5 %, 6 %, 7 %, 8 %, 9 % oder 10 % wird sichergestellt, dass das Verpackungsmaterial optimale mechanische Eigenschaften besitzt und sich beschädigungsfrei weiter zu einer Verpackung verarbeiten lässt.

In einer weiteren vorteilhaften Ausgestaltung der Erfindung ist vorgesehen, dass das beschichtete Substrat in Schritt c) mittels Infrarotbestrahlung und/oder Konvektion und/oder unter UV-Bestrahlung getrocknet wird. Hierdurch können das Trocknen der aufgebrachten Schicht und das Vernetzen des Polyvinylalkohols in Abhängigkeit des verwendeten Vernetzungsmittels optimal gesteuert und darüber hinaus der gewünschte Restfeuchtigkeitsgehalt präzise eingestellt werden. Die Bestrahlung mit UV-Licht kann dabei alternativ oder zusätzlich zu einer Infrarotbestrahlung und/oder Konvektion durchgeführt werden.

In weiterer Ausgestaltung der Erfindung wird in Schritt a) ein Substrat bereitgestellt, welches ein Basismaterial umfasst, dessen Außenseite mit einer Konditionierungsschicht und/oder einer Deckschicht versehen ist. Die Konditionierungsschicht und/oder die Deckschicht kann beispielsweise eine Polyvinylalkohol umfassende Schicht sein, welche vorzugsweise mit sphärischen oder plättchenförmigen Pigmenten gefüllt ist sein. Vorteilhaft hierbei ist, dass bereits der Konditionierungsstrich Barriereeigenschaften gegenüber hydrophoben Substanzen aufweist.

Weitere Vorteile ergeben sich, wenn die Konditionierungsschicht und/oder die Deckschicht unvernetzten Polyvinylalkohol umfasst und/oder aus unvernetztem Polyvinylalkohol besteht. Insbesondere kann vorgesehen sein, dass die Konditionierungsschicht und/oder die Deckschicht frei von quervernetztem Polyvinylalkohol ausgebildet ist, wobei hierdurch nicht ausgeschlossen ist, dass die Konditionierungsschicht und/oder die Deckschicht neben unvernetztem Polyvinylalkohol gegebenenfalls weitere Komponenten wie beispielsweise Füllstoffe und/oder Pigmente umfasst. Hierdurch kann die Elastizität und Biegsamkeit des Verpackungsmaterials vorteilhaft gesteigert werden. Darüber hinaus wird auf diese Weise sichergestellt, dass die Sperrschicht, welche im weiteren Verfahrensverlauf auf der Konditionierungsschicht und/oder Deckschicht erzeugt wird, bei der weiteren Verarbeitung des Verpackungsmaterials - beispielsweise beim Stanzen, Schneiden oder Kleben - nicht verletzt und ihre Sperrwirkung aufrechterhalten wird. Indem die Konditionierungsschicht und/oder die Deckschicht unvernetzten Polyvinylalkohol umfasst bzw. vollständig aus unvernetztem Polyvinylalkohol besteht oder frei von quervernetztem Polyvinylalkohol ist, wird die Sperrwirkung der Sperrschicht gegenüber hydrophoben Verbindungen außerdem zusätzlich verbessert, ohne dass Einschränkungen im Hinblick auf die biologische Abbaubarkeit des Verpackungsmaterials in Kauf genommen werden müssen.

In einer weiteren Ausgestaltung der Erfindung ist vorgesehen, dass die Schritte b) und c) mindestens einmal und/oder höchstens dreimal wiederholt werden. Hierdurch kann auf der Innenseite des Basismaterials ein Schichtsystem aus zwei, drei oder vier Sperrschichten gebildet werden, wodurch eine besonders hohe Sperrwirkung erzielt wird. Dies ist beispielsweise bei Verpackungen von Vorteil, die über den Seeweg transportiert werden bzw. die über längere Zeit unterschiedlichen klimatischen Bedingungen ausgesetzt sind. Die Sperrschichten können dabei grundsätzlich gleich oder unterschiedlich ausgebildet sein. Wenn die Schritte b) und c) mehrfach nacheinander durchgeführt werden, kann überschüssige wässrige Zusammensetzung einfach aufgefangen und für einen erneuten Verfahrensdurchgang wieder verwendet werden, wodurch die Verfahrenskosten erheblich gesenkt werden.

Weitere Vorteile ergeben sich, wenn das Substrat nach Schritt c) mit einer weiteren Zusammensetzung beschichtet wird, wobei die weitere Zusammensetzung zumindest Polyvinylalkohol umfasst, einen Feststoffgehalt von höchstens 25 Gew.-% aufweist und frei von Vernetzungsmitteln ist. Auf diese Weise kann eine Deckschicht aus unvernetztem Polyvinylalkohol hergestellt werden, wodurch das auf dem Basismaterial des Substrats ausgebildete Schichtsystem eine verbesserte Flexibilität und Dehnbarkeit besitzt. Indem die weitere Zusammensetzung einen Feststoffgehalt von höchstens 15 Gew.-% aufweist, wenn sie frei von Zusätzen wie Füllstoffen und/oder Pigmenten ausgebildet ist, oder wenn die weitere Zusammensetzung einen Gesamtfeststoffgehalt von höchstens 25 Gew.-% aufweist, wenn sie mit Füllstoffen und/oder Pigmenten versehen ist, kann die Viskosität der weiteren Zusammensetzung optimal auf das jeweils verwendete Auftragsverfahren abgestimmt werden. Zusätzlich wird dadurch die Lagerstabilität der wässrigen Zusammensetzung verbessert.

In einer weiteren Ausgestaltung der Erfindung ist vorgesehen, dass das Substrat nach dem Beschichten mit der weiteren Zusammensetzung getrocknet wird. Hierdurch wird verhindert, dass die Sperrschicht und/oder das Basismaterial durch Wasseraufnahme unerwünscht aufquellen.

Ein weiterer Aspekt der Erfindung betrifft ein Verpackungsmaterial, umfassend ein Substrat, welches ein Basismaterial aus Cellulose, eine einem Verpackungsgut abzuwendende Außenseite sowie eine dem Verpackungsgut zuzuwendende Innenseite aufweist, sowie ein auf der Innenseite des Substrats angeordnetes Schichtsystem mit wenigstens einer auf der Innenseite des Basismaterials angeordneten Sperrschicht für hydrophobe Verbindungen, wobei das Basismaterial gestrichenes oder ungestrichenes Papier, gestrichener oder ungestrichener Karton oder gestrichene oder ungestrichene Pappe ist und die Sperrschicht Polyvinylalkohol umfasst, welcher mittels eines Vernetzungsmittels quervernetzt ist, wobei das Vernetzungsmittel wenigstens ein Alkylorthosilikat und/oder wenigstens eine olefinisch gesättigte und/oder ungesättigte bi-, tri- oder multifunktionelle Verbindung ist, die mit den Hydroxy-Gruppen des Polyvinylalkohols reagiert und zumindest zwei funktionellen Gruppen ausgewählt aus Carbonsäure und Säureanhydrid aufweist. Das erfindungsgemäße Verpackungsmaterial besitzt eine hervorragende Sperrwirkung gegenüber hydrophoben Verbindungen bei gleichzeitig hoher Feuchtigkeitsbeständigkeit und kann im Unterschied zum Stand der Technik besonders einfach und kostengünstig hergestellt werden, da lediglich kostengünstige Ausgangsmaterialien benötigt und mit Hilfe von gängigen Fabrikationsanlagen schnell und einfach verarbeitet werden können. Das erfindungsgemäße Verpackungsmaterial garantiert zudem aufgrund seiner Barrierewirkung gegenüber hydrophoben Verbindungen - wie etwa Mineralölbestandteilen aus Recyclingmaterial oder aus Aufdrucken - die Lebensmittelsicherheit des Verpackungsguts. Gleichzeitig erhält es die ökologischen Vorteile einer altpapierbasierten Verpackungswirtschaft. Die weiteren sich ergebenden Vorteile sind den vorhergehenden Beschreibungen zu entnehmen, wobei vorteilhafte Ausgestaltungen des Verfahrens als vorteilhafte Ausgestaltungen des Verpackungsmaterials und umgekehrt anzusehen sind.

Weitere Vorteile ergeben sich, wenn die Sperrschicht zumindest überwiegend aus quervernetztem Polyvinylalkohol besteht. Mit anderen Worten ist vorgesehen, dass die Sperrschicht zu 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99% oder 100% aus quervernetztem Polyvinylalkohol gebildet ist. Hierdurch können insbesondere die Flexibilität, die Dehnbarkeit, die Sperrwirkung und die Bedruckbarkeit der Sperrschicht besonders einfach an den jeweiligen Anwendungszweck angepasst werden.

Eine zusätzlich verbesserte Sperrwirkung wird in weiterer Ausgestaltung der Erfindung dadurch erreicht, dass das Schichtsystem mindestens zwei Sperrschichten aus quervernetztem Polyvinylalkohol umfasst.

Eine besonders spezifische Sperrwirkung gegenüber unterschiedlichen hydrophoben Verbindungen wird in einer weiteren vorteilhaften Ausgestaltung der Erfindung erreicht, indem die mindestens zwei Sperrschichten Polyvinylalkohole mit unterschiedlichen Vernetzungsgraden und/oder Polyvinylalkohole mit unterschiedlichen Hydrolysegraden und/oder mit unterschiedlichen Vernetzungsmitteln vernetzte Polyvinylalkohole umfassen.

In einer weiteren vorteilhaften Ausgestaltung der Erfindung ist vorgesehen, dass die Polyvinylalkohol umfassende Sperrschicht organische, anorganische und/oder organisch-anorganisch modifizierte Partikel umfasst, welche eine sphärische oder plättchenförmige Teilchengeometrie aufweisen. Die Verwendung derartiger Partikel erlaubt unter anderem eine Anpassung des optischen Eindrucks des Verpackungsmaterials sowie eine bessere Bedruckbarkeit. Darüber hinaus bilden geeignete Partikel eine zusätzliche "mechanische" Barriere gegen den Durchtritt von hydrophoben Verbindungen. Die Sperrwirkung der Sperrschicht kann somit durch den Zusatz dieser Partikel, die als Füllstoff und/oder Pigmente fungieren können, vorteilhaft gesteigert werden. Insbesondere als vorteilhaft haben sich hierbei Kaolin, Schichtsilikate wie Montmorillonit, Bentonit, Vermiculit, Hectorit, Saponit, Laponit sowie Silika und Alumosilikate bzw. Mischungen davon erwiesen.

Weiterhin hat es sich als vorteilhaft gezeigt, wenn das Schichtsystem wenigstens eine Schicht umfasst, welche unvernetzten Polyvinylalkohol enthält. Vorzugsweise ist diese Schicht frei von quervernetztem Polyvinylalkohol bzw. ohne Zusatz von Vernetzungsmitteln ausgebildet. Hierdurch wird die Flexibilität und Dehnbarkeit des Schichtsystems vorteilhaft gesteigert, sodass eine etwaige Verletzung der Sperrschicht bei der weiteren Verarbeitung des erfindungsgemäßen Verpackungsmaterials besonders zuverlässig verhindert wird.

In einer weiteren vorteilhaften Ausgestaltung der Erfindung ist vorgesehen, dass die unvernetzten Polyvinylalkohol enthaltende Schicht zwischen zwei Sperrschichten und/oder auf einer dem Basismaterial abgewandten Seite der Sperrschicht angeordnet ist. Mit anderen Worten ist vorgesehen, dass die unvernetzten Polyvinylalkohol enthaltende Schicht bezüglich des Basismaterials die abschließende Deckschicht bildet und/oder zwischen zwei quervernetzten Polyvinylalkohol enthaltenden Sperrschichten ausgebildet ist. Dies erlaubt eine besonders gute Anpassung an unterschiedliche Verwendungszwecke des Verpackungsmaterials und erhöht neben der Flexibilität und Dehnbarkeit des Schichtsystems auch die Sperrwirkung gegenüber hydrophoben Verbindungen.

In einer weiteren vorteilhaften Ausgestaltung der Erfindung ist vorgesehen, dass das Verpackungsmaterial durch ein Verfahren nach einem der vorhergehenden Ausführungsbeispiele erhältlich ist. Die sich hieraus ergebenden Merkmale und deren Vorteile sind den vorhergehenden Beschreibungen zu entnehmen.

Weitere Merkmale der Erfindung ergeben sich aus den Ansprüchen, den Ausführungsbeispielen sowie anhand der Zeichnung. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:

Weitere Merkmale der Erfindung ergeben sich aus den Ansprüchen, den Ausführungsbeispielen sowie anhand der Zeichnung. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:

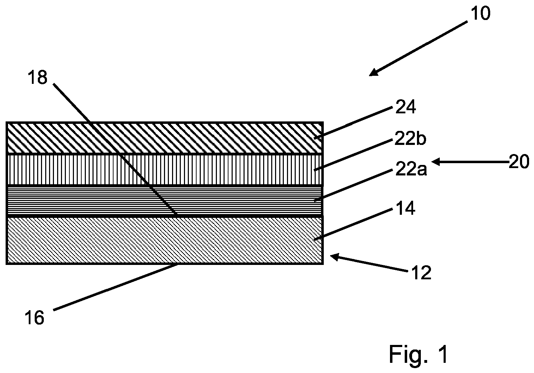

- Fig. 1: eine schematische seitliche Schnittansicht eines erfindungsgemäßen Verpackungsmaterials gemäß einem Ausführungsbeispiel.

Fig. 1 zeigt eine schematische seitliche Schnittansicht eines erfindungsgemäßen Verpackungsmaterials 10 gemäß einem Ausführungsbeispiel. Das Verpackungsmaterial umfasst ein Substrat 12, welches aus einem Basismaterial 14 besteht und eine einem Verpackungsgut abzuwendende Außenseite 16 sowie eine dem Verpackungsgut zuzuwendende Innenseite 18 aufweist. Bei dem Basismaterial 14 handelt es sich im vorliegenden Ausführungsbeispiel um einen Karton mit einer flächenbezogenen Masse von 400 g/m². Auf der Innenseite 18 des Substrats 12 ist ein Schichtsystem 20 ausgebildet, welches durch Erzeugen einer ersten Sperrschicht 22a, einer zweiten Sperrschicht 22b sowie einer als Deckschicht fungierenden Schicht 24 hergestellt ist. Die Sperrschichten 22a, 22b umfassen quervernetzten Polyvinylalkohol. Die Sperrschicht 22a umfasst darüber hinaus plättchenförmige bzw. sphärische Partikel bzw. Mischungen davon als Füllstoff und/oder Pigment. Die Sperrschichten 22a, 22b verunmöglichen oder verhindern damit zumindest weitgehend die Migration hydrophober Verbindungen durch das Schichtsystem 20 hindurch. Die im Folgenden näher beschriebene Quervernetzung des Polyvinylalkohols sorgt dabei für eine erhöhte mechanische Stabilität und verhindert ein Aufquellen der Sperrschichten 22a, 22b, wenn diese mit Feuchtigkeit in Berührung kommen.

Als Füllstoffe und/oder Pigmente eignen sich grundsätzlich organische, anorganische sowie organisch-anorganisch modifizierte Partikel, die mit oder ohne Quellvermögen in Wasser ausgestattet sind. Im vorliegenden Ausführungsbeispiel umfasst die Sperrschicht 22a Kaolin. Kaolin bietet dabei den Vorteil, dass es säurestabil ist und in Wasser nicht quillt. Darüber hinaus besteht das verwendete Kaolin aus plättchenförmigen Partikeln, welche eine mechanische Barriere bilden und hierdurch die Migration von Verbindungen durch die Sperrschicht 22a zusätzlich erschweren bzw. verunmöglichen. Die zweite Sperrschicht 22b besteht demgegenüber ausschließlich aus quervernetztem Polyvinylalkohol, wobei zur Herstellung der beiden Sperrschichten 22a, 22b Polyvinylalkohole mit unterschiedlichen Hydrolyse- und Polymerisationsgraden verwendet und mit unterschiedlichen Vernetzungsmitteln quervernetzt wurden. Grundsätzlich können die beiden Sperrschichten 22a, 22b aber natürlich auch den gleichen quervernetzten Polyvinylalkohol umfassen. Die abschließende Schicht 24, welche in einer späteren, aus dem Verpackungsmaterial 10 gebildeten Verpackung in Kontakt mit dem Verpackungsgut steht, besteht demgegenüber aus unvernetztem Polyvinylalkohol und erhöht insbesondere die Flexibilität und Dehnbarkeit des Schichtsystems 20. Alternativ oder zusätzlich kann vorgesehen sein, dass die Schicht 24 unmittelbar auf dem Substrat 12 und/oder zwischen den Sperrschichten 22a, 22b ausgebildet wird.

Die Außenseite 16 des Substrats 12 ist im gezeigten Ausführungsbeispiel nicht beschichtet. Grundsätzlich können aber auch auf der Außenseite 16 eine oder mehrere Schichten vorgesehen sein, um bestimmte Eigenschaften des Verpackungsmaterials 10, beispielsweise eine bessere Bedruckbarkeit oder eine Gas- und/oder Feuchtigkeitsbarrierewirkung, zu erzielen.

Im Folgenden werden verschiedene Ausführungsbeispiele für die Herstellung des erfindungsgemäßen Verpackungsmaterials 10 mit Barriereeigenschaften gegenüber unpolaren chemischen Verbindungen aufgeführt.

### 1. Herstellung einer wässrigen Polyvinylalkohol-Lösung

Sofern der Polyvinylalkohol nicht bereits in Wasser gelöst vorliegt, wird die Herstellung einer Polyvinylalkohol-Lösung wie folgt durchgeführt:
Zunächst wird eine definierte Menge kaltes Wasser vorgelegt. Anschließend wird eine definierte Menge eines gegebenenfalls fein gemahlenen Polyvinylalkohol-Pulvers mit einem Hydrolysegrad, der bevorzugt zwischen 80 % und 99,9 % liegt, unter starkem Rühren (2000 U/min) bei einer Temperatur von 75 °C bis 80 °C innerhalb von 30 bis 45 Minuten mit einem Intensiv- oder Dissolverrührer eingerührt. Der Auflösungsprozess ist beendet, sobald die Lösung klar ist. Die noch warme Lösung wird auf 25 °C abgekühlt. Vor der weiteren Verwendung wird der genaue Feststoffgehalt der Lösung beispielsweise mittels einer Thermowaage bestimmt und gegebenenfalls auf einen Wert zwischen 5 Gew.-% und 15 Gew.-% Nachdem der Abkühlvorgang beendet ist, wird der pH-Wert der frisch zubereiteten Polyvinylalkohol-Lösung bei Bedarf eingestellt. Die Einstellung des pH-Werts erfolgt in an sich bekannter Weise durch Zugabe einer geeigneten Säure oder Base. Geeignet sind beispielsweise Mineralsäuren wie etwa konzentrierte Salzsäure oder Basen wie Natriumhydroxid.

### 1. Herstellung einer wässrigen Zusammensetzung

### 2.1. Adipinsäure (AS), Glutarsäure (GS) und/oder Maleinsäure (MS) als Vernetzungsmittel

Die Zugabe der genannten Dicarbonsäuren kann in zwei Unterkategorien unterteilt werden:
Die AS und GS gehören der Gruppe der gesättigten Dicarbonsäuren an, wobei die AS schlecht (24 g/l) und die GS leicht (640 g/l) in kaltem Wasser (20 °C) löslich sind. Die Kondensationsreaktionen beider Säuren mit Polyvinylalkohol werden vorzugsweise durch Zugabe von Mineralsäuren (z. B. Salzsäure) katalytisch unterstützt, indem der pH-Wert der wässrigen Zusammensetzung auf pH = 3 eingestellt wird.

Die MS ist eine ungesättigte Dicarbonsäure, die sehr gut wasserlöslich (788 g/l, 20 °C) ist und in wässriger Lösung stark sauer reagiert. Die MS liegt in cis-Form vor. Durch UV-Strahlung und längeres Erhitzen bei 150 °C lagert sie sich in die trans-Form (Fumarsäure) um, was bei der Quervernetzungsreaktion gegebenenfalls berücksichtigt werden kann. Bei Verwendung der MS ist daher in der Regel keine zusätzliche pH-Einstellung der wässrigen Zusammensetzung notwendig. Der pH-Wert liegt je nach verwendeter Menge zwischen 1,6 und 3,2, abhängig von der in der wässrigen Polyvinylalkohol-Lösung gelösten Menge MS. Die zugegebene Gesamtmenge an Dicarbonsäure bewegt sich grundsätzlich zwischen 5 und 25 Gew.-%, bezogen auf 100 Gew.-% Polyvinylalkohol.

Die wässrige Zusammensetzung, welche Polyvinylalkohol und eine oder mehrere der genannten Dicarbonsäuren umfasst, wird anschließend auf 70 °C erhitzt, 15 Minuten bei 70 °C intensiv gerührt und dann auf 25 °C abgekühlt. Der pH-Wert kann jetzt bei Bedarf entsprechend der jeweils eingesetzten Dicarbonsäure eingestellt werden. Nach der pH-Wert-Einstellung der wässrigen Zusammensetzung erfolgt vorzugsweise der folgende Entgasungsschritt.

Nach 15 Minuten wird die wässrige Zusammensetzung bei einem anfänglichen Unterdruck von -200 mbar, der in der Folge langsam auf -500 mbar bis -600 mbar gesteigert wird, entgast. Wird das Vakuum weiter erhöht (z. B. auf über -800 mbar, d. h. auf einen Druck von etwa 200 mbar), beginnt das Wasser zu sieden und Kondensat scheidet sich an den Wänden des Unterdruckbehälters ab. Zum Abschluss wird die wässrige Zusammensetzung bei einem Druck von etwa 100 mbar ohne weiteres Rühren entgast.

### 2.2. Polyacrylate als Vernetzungsmittel

Unter Polyacrylaten werden im Rahmen der vorliegenden Erfindung Derivate der Polyacrylsäure mit der allgemeinen Formel 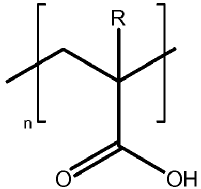 verstanden, wobei R Wasserstoff oder unsubstituierte oder substituierte Alkylgruppe, insbesondere Methyl-, Ethyl-, 1-Propyl-, 2-Propyl-, 1-Butyl-, 2-Butyl- und/oder tert-Butyl-, bedeutet. Es werden bevorzugt Polyacrylsäuren im Molekulargewichtsbereich von 2000 bis 1500000 g/mol, insbesondere von 50000 bis 500000 g/mol, verwendet, da diese Klasse vergleichsweise gut in kaltem Wasser (20 °C) löslich ist. Die zugegebene Menge an Polyacrylsäure bewegt sich zwischen 0,01 und 10 Gew-%. Die Durchmischzeit beträgt ungefähr 15 min bei 25 °C bis 60 °C. Der pH-Wert der Mischung kann bei Bedarf durch Zugabe von basischen Zusätzen wie KOH, NaOH oder dergleichen erhöht werden. Vor dem Auftrag empfiehlt sich ein Entgasungsschritt.

### 2.3. Mischungen von Polyvinylalkohol mit den unter 2.1. bis 2.2. beschriebenen Vernetzungsmitteln

Die vorstehend genannten Vernetzungsmittel können grundsätzlich beliebig gemischt werden.

### 2.4. Einbringen von Füllstoffen und/oder Pigmenten

Füllstoffe und/oder Pigmente mit vorzugsweise sphärischen und/oder plättchenförmigen Partikeln werden in einem Gewichtsprozent-Bereich von 5-60 % bezogen auf 100 Gew.-% Polyvinylalkohol (PVOH) zu der wässrigen Zusammensetzung hinzu gegeben. Als Füllstoffe und/oder Pigmente eignen sich grundsätzlich organische, anorganische und/oder organisch-anorganisch modifizierte Partikel, die mit oder ohne Quellvermögen in Wasser ausgestattet sind.

Sphärische Partikel wie Silika-Partikel mit spezifischen Oberflächen von 200-500 g/m² können eingesetzt werden. Die Silika-Partikel liegen in fester Form bzw. in wässrigen Dispersionen vor. Die Größe der Partikel bewegt sich zwischen 5-10 nm. Es können unmodifizierte wie auch

(hydrophil) modifizierte Partikel eingesetzt werden. Zugegeben werden Partikel im Bereich von 10-60 % bezogen auf 100 Gew-% PVOH.

Alternativ können Mischungen von sphärischen und plättchenförmigen Partikeln zugegeben werden. Plättchenförmige Partikel wie Kaoline und Schichtsilikate (teilweise bzw. vollständig exfoliert), können unmodifiziert oder modifiziert eingesetzt werden. Schichtsilikate können mit Alkoxysilanen funktionalisiert werden, die Amino-, Epoxy- oder Mercaptogruppen tragen. Neben Kaolin können Montmorillonit, Bentonit, Vermiculit, Hectorit, Saponit, Laponit, etc. bzw. Mischungen davon eingesetzt werden. Beim Einsatz von Kaolin wird ein so genannter "hyper-platy", nanoskalierter Typ mit einem Shape-Faktor von mind. 40 verwendet. Bevorzugt ist ein Shape-Faktor zwischen 60 und 100 und eine Größe von max. 1 µm.

Weitere Füllstoffe wie natürliche und/oder synthetische Alumosilikate mit definierten Porenvolumina von 3-10 Å, 8-13 Å und 10-15 Å oder mehr Angström können allein bzw. in Kombination mit sphärischen bzw. plättchenförmigen Füllstoffen zugesetzt, bzw. als Mischungen daraus zugesetzt werden.

Weiterhin können natürliche organische Füllstoffe wie Cellulosefasern und/oder Celluloseregeneratfasern, insbes. mikro- und nanofibrillierte Zellulosen, als Füllstoffe verwendet werden. Diese Füllstoffe können alleine oder in Kombination mit einem oder mehreren anderen Füllstoffen verwendet werden.

In einer weiteren Ausgestaltung ist vorgesehen, dass die wässrige Zusammensetzung grundsätzlich frei von Bor-Verbindungen wie beispielsweise Borax, frei von in Wasser quellfähigen Silicaten, insbesondere von quellfähigen Schichtsilikaten, und/oder frei von Hydrogensulfitaddukten ausgebildet ist, um eine hohe chemische und mechanische Beständigkeit bei gleichzeitig hoher Lebensmittelverträglichkeit der resultierenden Sperrschicht 22 sicherzustellen.

### 2. Auftragen der wässrigen Zusammensetzung

Eine gemäß den vorstehend beschriebenen Rezepturen hergestellte wässrige Zusammensetzung wird auf das gestrichene oder bevorzugt ungestrichene Substrat 12 aufgebracht. Das Basismaterial 14 des Substrats 12 besteht aus Karton und weist ein Flächengewicht zwischen 200 g/m² und 800 g/m² auf.

### 3.1. Auftragsmöglichkeiten und Schichtanordnung

### 3.1.1. Einschichtiger Nassfilmauftrag

Das Substrat 12 kann zur Herstellung einer einzelnen Sperrschicht 22 mit wässrigen Zusammensetzungen bestehend aus:
- Polyvinylalkohol + Dicarbonsäuren;
- Polyvinylalkohol + Polyacrylsäuren;
- Polyvinylalkohol + Dicarbonsäuren + Füllstoffe und/oder Pigmente;
- Polyvinylalkohol + Polyacrylsäuren + Dicarbonsäuren + Füllstoffe und/oder Pigmente;
- Polyvinylalkohol + Mischung von unterschiedlichen Vernetzungsmitteln;
- Polyvinylalkohol + Mischung von unterschiedlichen Vernetzungsmitteln + Füllstoffen und/oder Pigmenten;
beschichtet werden, wobei der Nassfilmauftrag 3 bis 15 g/m² betragen kann.

Weitere Ausführungsbeispiele für die im Rahmen der Erfindung verwendbare wässrige Zusammensetzung sind in Tabelle 1 angegeben. Dabei ist erneut zu betonen, dass der Feststoffgehalt jeder wässrigen Zusammensetzung höchstens 25 Gew.-% inklusive etwaig vorhandener Füllstoffe und/oder Pigmente beträgt. Bevorzugt beträgt der Feststoffgehalt jeder wässrigen Zusammensetzung höchstens 15 %, wenn die wässrige Zusammensetzung frei von Füllstoffen und/oder Pigmenten ausgebildet ist. Die in Tabelle 1 angegebenen Mengen an Polyvinylalkohol sind immer als 100 Teile anzusehen. Die Menge des Vernetzungsmittels ist immer auf die 100 Teile Polyvinylalkohol bezogen.

**Tabelle 1: Inhaltsstoffe der wässrigen Zusammensetzung**

| Hauptkomponente | | | Teile | Teile | Teile |
|---|---|---|---|---|---|
| PVOH | Hydrolysegrad: 80->99 % | 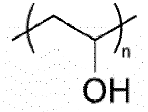 | 100 | 100 | 100 |
| | | | | | |
| Vernetzungsmittel/Verbindungsklasse | Chem. Verbindung | Strukturformel | Teile - min. Anzahl | Teile - max. Anzahl | Teile bevorzugt |
| Polycarbonsäuren, ungesättigte Carbonsäuren | Malonsäure | 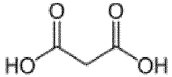 | 1 | 50 | 10-30 |
| | Glutarsäure | 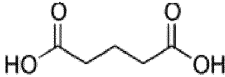 | 1 | 50 | 10-30 |
| | Adipinsäure | 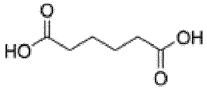 | 1 | 50 | 10-30 |
| | Zitronensäure | 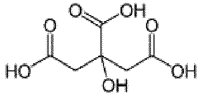 | 1 | 50 | 2-10 |
| | Butantetracarbonsäureanhydrid | 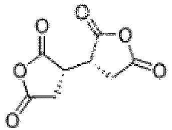 | 0.1 | 25 | 1-10 |
| | Acrylsäure | 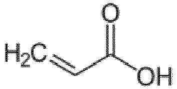 | 0.1 | 25 | 1-10 |
| | Methacrylsäure | 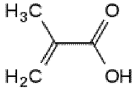 | 0.1 | 25 | 1-10 |
| | Maleinsäure | 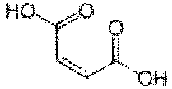 | 0.1 | 25 | 1-10 |
| Silane | TEOS | 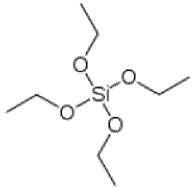 | 0.1 | 10 | 1-10 |
| Polyacrylsäure | | 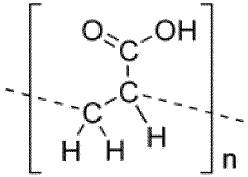 | 0.01 | 25 | 0.1-10 |

### 3.1.2. Mehrschichtiger Auftrag

Bei Bedarf können mehrschichtige Schichtsysteme 20 mit zwei, drei, vier oder fünf nacheinander aufgebrachten Sperrschichten 22 hergestellt werden. Es kann eine unvernetzte Polyvinylalkohol-Schicht zwischen zwei Sperrschichten 22 und/oder wie in Fig. 1 gezeigt als abschließende Schicht 24 aufgebracht werden. Die unvernetzte bzw. vernetzte Polyvinylalkoholschicht kann mit Füllstoffen und/oder Pigmenten gefüllt sein. Das Trockengewicht jeder Schicht 24 und/oder Sperrschicht 22 kann wiederum 3 bis 15 g/m² betragen.

### 3.2. Auftragssysteme

Die unter 3.1.1. und 3.1.2. beschriebenen Schichtsysteme 20 können mit in der Beschichtungs- und Papierindustrie gängigen Auftragswerkzeugen mittels Sprühen, Rakeln, Gießen oder einem gleichwertigen Konturstreichverfahren aufgetragen werden. Geeignete Parameterwerte sind beispielsweise:
Rollrakel: 10, 20, 40, 60, 80 µm Nassfilmdicke
Filmziehrahmen: variable Spalteinstellung, 0-1000 µm Nassfilmdicke
Filmziehrahmen: fixer Spalt: 60, 120 µm Nassfilmdicke

Diese Auftragswerkzeuge werden mittels eines motorgesteuerten Auftragssystems mit einer Maximalgeschwindigkeit des Substrats 12 von bis zu 1000 m/min für einen gleichmäßigen Auftrag eingesetzt.

Alternativ oder zusätzlich wird ein Düsenauftragssystem verwendet, welches gleichzeitig mindestens eine Sperrschicht 22 bzw. Schicht 24 und maximal vier Schichten auf das sich in horizontaler Richtung bewegliche Karton-Substrat 12 aufbringt. Die Durchmischung der wässrigen Zusammensetzungen kann in der Düsenkammer, im Düsenspalt (Spaltbreite z. B. 0.1-1.0 mm) oder außerhalb der Düse am Substrat 12 erfolgen. Nassfilmschichtdicken über 200 µm sind mit diesem Auftragsverfahren möglich. Aus den Parametern "Schichtdicke" und "Maximalgeschwindigkeit" des Linearantriebs ergibt sich die benötigte Fördermenge der wässrigen Zusammensetzung.

### 4. Trocknung und Vernetzung der Nassfilme mittels IR-Strahlung (IR), Konvektionstrocknung (KV) und/oder UV-Strahlung (UV)

Das Lösungsmittel (Wasser) der auf das Substrat 12 aufgebrachten wässrigen Zusammensetzung wird mit Infrarot- und/oder Konvektionstrocknern ausgetragen. Beide Trocknertypen können einzeln, gemeinsam, hintereinander geschaltet oder unabhängig voneinander verwendet werden. Die Trocknertemperaturen beider Trocknertypen können beispielsweise zwischen 60 °C und 200 °C gewählt werden. Zu- bzw. Abluft und Temperatureinstellungen der Trockner bzw. der Trocknerkombination werden vorzugsweise so gewählt, dass ein blasenfreies Schichtsystem 20 entsteht. Eine Restfeuchte von 5-7 Gew.-% im Substrat 12 kann als Kriterium für die genaue Temperatureinstellung herangezogen werden.

Alle Sperrschichten 22 bzw. Schichten 24 werden bevorzugt zuerst mit IR und/oder KV getrocknet. Bei wässrigen Zusammensetzungen, die als Vernetzungsmittel Dicarbonsäuren, Polysäuren und/oder Mischungen davon (siehe 2.1 bis 2.3) enthalten, ist die so zugeführte Wärme ausreichend, um die Quervernetzung des Polyvinylalkohols praktisch quantitativ durchzuführen.

Grundsätzlich empfiehlt es sich, alle wässrigen Zusammensetzungen, die UV-aktive Vernetzungsmittel enthalten, vor, während und/oder nach der thermischen Trocknung mit UV-Licht zu bestrahlen.

### 5. Prüfungsverfahren

### 5.1. Messung der Sperrwirkung gegenüber hydrophoben Kohlenwasserstoffen

Das in Fig. 1 gezeigte Verpackungsmaterials 10 wurde einer Migrationsuntersuchung mit dem Lebensmittelsimulanz Tenax® in Anlehnung an die Prüfnormen DIN EN 1186-13 und DIN EN 14338 unterworfen, wobei das Tenax® auf das Schichtsystem 20 des Verpackungsmaterials 10 aufgebracht wurde. Nach Inkubation des Migrationsansatzes bei definierter Temperatur und Zeit wurden die migrierten Substanzen mittels n-Hexan vom Tenax® eluiert und die Mineralöl-Kohlenwasserstoffe mittels Flüssigkeitschromatografie spezifisch in zwei unterschiedlichen Fraktionen, nämlich die Fraktion der gesättigten (mineral oil saturated hydrocarbons, MOSH) und die Fraktion der aromatischen Kohlenwasserstoffe (mineral oil aromatic hydrocarbons, MOAH), aufgetrennt. Die beiden so erhaltenen Fraktionen wurden gaschromatographisch analysiert und als Summenparameter erfasst, wobei für die Auswertung der Signalflächensummen deuteriertes n-Nonadecan bzw. Diethylnaphthalin zum Einsatz kamen. In Bezug auf die extrahierbare Ausgangsmenge an Mineralöl-Kohlenwasserstoffen aus dem Rohverpackungsmaterial, welche die Summe aller migrierfähigen Komponenten definiert, wurde im Tenax®-Eluat weniger als 1 % der migrierfähigen Substanzen nachgewiesen. Die Migration der hydrophoben Kohlenwasserstoffe wird somit zu mehr als 99 % verhindert und liegt daher für Mineralöle immer unter einem Wert von 0,6 mg/kg verpacktem Lebensmittel.

### 5.2. Schichtaufbau

Zur Charakterisierung des Schichtaufbaus des Schichtsystems 20 wurde ein Semidünnschnitt angefertigt, anhand welchem die einzelnen Schichten 22a, 22b und 24 mit einem optischen und einem IR- oder Raman-Mikroskop spektroskopisch identifiziert wurden.

### 6. Weitere Ausführungsbeispiele

Im Folgenden werden weitere Ausführungsbeispiele für das erfindungsgemäße Verpackungsmaterial 10 angegeben. Sofern nichts anderes angegeben ist, erfolgte die Herstellung in der vorstehend beschriebenen Weise.

### 6.1. Beispiel 1

Basismaterial 14: Karton mit einer flächenbezogenen Masse zwischen 200-800 g/m², bevorzugt ungestrichen

Wässrige Zusammensetzung (vernetzend):
- Wässrige Polyvinylalkohol-Lösung (Elvanol 90-50 oder Elvanol 85-82, Dupont bzw. Mischungen davon), Pigmente (gemäß Punkt 2.5)
- Als Vernetzer kommen die in Punkt 3.1.1 aufgeführten Vernetzer oder Mischungen dieser infrage
- Feststoffgehalt: bis zu 25,00 Gew.-%

Beschichten des Karton-Basismaterials 14 mit der wässrigen Zusammensetzung (40-200 µm Nassfilmschichtdicke)
Auftragsverfahren: Rakel, Luftbürste, Düse
Geschwindigkeit des Substrats 12: bis 1000 m/min
Trocknung: IR & Konvektion bis zum Erreichen von 5-7 % Restfeuchte im Basismaterial 14

### 6.2. Beispiel 2

Substrat 12: Karton mit einer flächenbezogenen Masse zwischen 200-800 g/m², gestrichen oder bevorzugt ungestrichen

Wässrige Zusammensetzung (thermisch vernetzend bzw. härtend):
- Wässrige PVOH-Lösung, Feststoffgehalt 10 Gew.-% (Elvanol 85-82 bzw. Elvanol 90-50 und Mischungen davon, Dupont), 100-Teile
- Maleinsäure, p. a. (Sigma), 5 Teile bezogen auf 100 Teile PVOH

Beschichten des Substrats mit der wässrigen Zusammensetzung (1-Schicht-Auftrag, 40-200 µm Nassfilmschichtdicke)
Auftragsverfahren: Düse, Einschichtauftrag
Geschwindigkeit des Substrats 12: bis 1000 m/min
Trocknung: IR & Konvektion bis zum Erreichen von 5-7 % Restfeuchte im Basismaterial 14

### 6.3. Beispiel 3

Basismaterial 14: Papier mit einer flächenbezogenen Masse zwischen 50-150 g/m², gestrichen oder bevorzugt ungestrichen

Wässrige Zusammensetzung (thermisch härtend):
- Wässrige PVOH-Lösung, Feststoffgehalt 10 Gew.-% (PVOH-8582 bzw. Elvanol 9050 bzw. Mischungen davon, Dupont), 100 Teile
- Polyacrylsäure, 0,01-5,0 Teile bezogen auf 100 Teile PVOH

Beschichten des Substrats mit der wässrigen Zusammensetzung (1-Schicht-Auftrag, 40-200 µm Nassfilmschichtdicke)
Auftragsverfahren: Düse, Einschichtauftrag
Geschwindigkeit des Basismaterials: bis 1000 m/min
Trocknung: IR & Konvektion bis zum Erreichen von 5-7 % Restfeuchte im Basismaterial 14.

### 6.4. Beispiel 4

Basismaterial 14: Karton mit einer flächenbezogenen Masse zwischen 200-800 g/m², gestrichen oder bevorzugt ungestrichen
Zusammensetzungen: Kombination aus Beispiel 1 und Beispiel 2 oder Beispiel 1 und Beispiel 3, Die Beschichtung aus Beispiel 1 wird als unterste Schicht auf das Basismaterial getragen, darauf wird die Beschichtung gemäß der Rezeptur aus Beispiel 2 und/oder 3und/oder Zwei- oder Dreifachkombinationen dieser Beispiele aufgebracht.
Mehrschichtauftrag, jeweils 80-200 µm Nassfilmschichtdicke
Geschwindigkeit des Basismaterials: bis 1000 m/min
Auftragsverfahren: Rakel, Düse

## Patentansprüche

1. Verfahren zum Herstellen eines beschichteten Verpackungsmaterials (10), umfassend zumindest die Schritte:
a) Bereitstellen eines Substrats (12), welches ein Basismaterial (14) aus Cellulose, eine einem Verpackungsgut abzuwendende Außenseite (16) sowie eine dem Verpackungsgut zuzuwendende Innenseite (18) aufweist, wobei das Basismaterial gestrichenes oder ungestrichenes Papier, gestrichener oder ungestrichener Karton oder gestrichene oder ungestrichene Pappe ist;
b) Beschichten der Innenseite (18) des Substrats mit wenigstens einer Schicht aus einer wässrigen Zusammensetzung, welche zumindest Polyvinylalkohol und ein Vernetzungsmittel umfasst und einen Feststoffgehalt von höchstens 25 Gew.-% aufweist, wobei als Vernetzungsmittel wenigstens ein Alkylorthosilikat und/oder wenigstens eine olefinisch gesättigte und/oder ungesättigte bi-, tri- oder multifunktionelle Verbindung, die mit den Hydroxy-Gruppen des Polyvinylalkohols reagieren kann und zumindest zwei funktionellen Gruppen ausgewählt aus Carbonsäure und Säureanhydrid aufweist, verwendet wird;
c) Trocknen der Schicht und Vernetzen des Polyvinylalkohols mithilfe des Vernetzungsmittels unter Ausbildung einer Sperrschicht (22a, 22b) für hydrophobe Verbindungen.

2. Verfahren nach Anspruch 1,
**dadurch gekennzeichnet, dass**
eine wässrige Zusammensetzung mit einem Feststoffgehalt zwischen 3 Gew.-% und 25 Gew.-%, insbesondere zwischen 10 Gew.-% und 22 Gew.-% und/oder einen Wassergehalt von mindestens 75 Gew.-%, insbesondere von mindestens 80 Gew.-%, verwendet wird.

3. Verfahren nach einem der Ansprüche 1 oder 2,
**dadurch gekennzeichnet, dass**
als Vernetzungsmittel Tetraethylorthosilikat, Malonsäure, Glutarsäure, Adipinsäure, Zitronensäure, Butantetracarbonsäure, Maleinsäure, Polyacrylsäure, Polyalkylacrylsäure, insbesondere Polymethacrylsäure und/oder Polyethylacrylsäure, und/oder eine beliebige Mischung hieraus und/oder ein Polymerisat und/oder ein Copolymerisat davon verwendet wird.

4. Verfahren nach einem der Ansprüche 1 bis 3,
**dadurch gekennzeichnet, dass**
eine wässrige Zusammensetzung verwendet wird, welche bezogen auf 100 Gewichtsanteile Polyvinylalkohol zwischen 0,01 und 55 Gewichtsanteile Vernetzungsmittel und/oder welche bezogen auf 100 Gewichtsanteile Polyvinylalkohol zwischen 1 und 60 Gewichtsanteile eines Füllstoffs und/oder eines Pigments umfasst.

5. Verfahren nach Anspruch 4,
**dadurch gekennzeichnet, dass**
ein Füllstoff und/oder ein Pigment verwendet wird, welches säurestabil ist und/oder zumindest im Wesentlichen sphärische und/oder plättchenförmige Partikelgeometrien aufweist.

6. Verfahren nach einem der Ansprüche 1 bis 5,
**dadurch gekennzeichnet, dass**
die wässrige Zusammensetzung derart auf das Substrat (12) aufgebracht wird, dass sich eine flächenbezogene Trockenmasse zwischen 1 g/m² und 20 g/m², insbesondere zwischen 3 g/m² und 15 g/m², ergibt, und/oder dass die wässrige Zusammensetzung derart auf das Substrat (12) aufgebracht wird, dass die Schicht eine Nassfilmdicke zwischen 1 µm und 1000 µm, insbesondere zwischen 10 µm und 200 µm, aufweist.

7. Verfahren nach einem der Ansprüche 1 bis 6,
**dadurch gekennzeichnet, dass**
die wässrige Zusammensetzung mittels eines egalisierenden Streichverfahrens, insbesondere mittels Rakel, Klinge und/oder Filmpresse, und/oder mittels eines Konturstreichverfahrens, insbesondere mittels Gießen, Sprühen, Vorhangbeschichten und/oder Luftbürste, auf das Substrat (12) aufgebracht wird.

8. Verfahren nach einem der Ansprüche 1 bis 7,
**dadurch gekennzeichnet, dass**
das beschichtete Substrat (12) in Schritt c) mittels Infrarotbestrahlung und/oder mittels Konvektion und/oder unter UV-Bestrahlung getrocknet wird.

9. Verfahren nach einem der Ansprüche 1 bis 8,
**dadurch gekennzeichnet, dass**
in Schritt a) ein Substrat (12) bereitgestellt wird, welches ein Basismaterial (14) umfasst, dessen Außenseite (16) mit einer Konditionierungsschicht und/oder einer Deckschicht versehen ist.

10. Verfahren nach einem der Ansprüche 1 bis 9,
**dadurch gekennzeichnet, dass**
das Substrat (12) nach Schritt c) mit einer weiteren Zusammensetzung beschichtet wird, wobei die weitere Zusammensetzung zumindest Polyvinylalkohol umfasst, einen Feststoffgehalt von höchstens 15 Gew.-% aufweist und frei von Vernetzungsmitteln ist.

11. Verpackungsmaterial (10), umfassend:
- ein Substrat (12), welches ein Basismaterial (14) aus Cellulose eine einem Verpackungsgut abzuwendende Außenseite (16) sowie eine dem Verpackungsgut zuzuwendende Innenseite (18) aufweist, wobei das Basismaterial gestrichenes oder ungestrichenes Papier, gestrichener oder ungestrichener Karton oder gestrichene oder ungestrichene Pappe ist; und
- ein auf der Innenseite (18) des Substrats (12) angeordnetes Schichtsystem (20) mit wenigstens einer Sperrschicht (22a, 22b) für hydrophobe Verbindungen, **dadurch gekennzeichnet, dass**
die Sperrschicht (22a, 22b) auf der Innenseite (18) des Basismaterials (14) Polyvinylalkohol umfasst, welcher mittels eines Vernetzungsmittels quervernetzt ist, wobei das Vernetzungsmittel wenigstens ein Alkylorthosilikat und/oder wenigstens eine olefinisch gesättigte und/oder ungesättigte bi-, tri- oder multifunktionelle Verbindung ist, die mit den Hydroxy-Gruppen des Polyvinylalkohols reagiert und zumindest zwei funktionellen Gruppen ausgewählt aus Carbonsäure und Säureanhydrid aufweist.

12. Verpackungsmaterial (10) nach Anspruch 11,
**dadurch gekennzeichnet, dass**
die Sperrschicht (22a, 22b) zumindest überwiegend aus quervernetztem Polyvinylalkohol besteht.

13. Verpackungsmaterial (10) nach Anspruch 11 oder 12,
**dadurch gekennzeichnet, dass**
das Schichtsystem (20) mindestens zwei Sperrschichten (22a, 22b) aus quervernetztem Polyvinylalkohol umfasst, wobei wenigstens eine Sperrschicht (22a, 22b) vorzugsweise wenigstens einen Füllstoff und/oder wenigstens ein Pigment umfasst.

14. Verpackungsmaterial (10) nach Anspruch 13,
**dadurch gekennzeichnet, dass**
die mindestens zwei Sperrschichten (22a, 22b) Polyvinylalkohole mit unterschiedlichen Vernetzungsgraden und/oder Polyvinylalkohole mit unterschiedlichen Hydrolysegraden und/oder mit unterschiedlichen Vernetzungsmitteln vernetzte Polyvinylalkohole umfassen.

15. Verpackungsmaterial (10) nach einem der Ansprüche 11 bis 14,
**dadurch gekennzeichnet, dass**
das Schichtsystem (20) wenigstens eine Schicht (24) umfasst, welche unvernetzten Polyvinylalkohol enthält, wobei die unvernetzten Polyvinylalkohol enthaltende Schicht (24) zwischen zwei Sperrschichten (22a, 22b) und/oder auf einer dem Basismaterial (14) abgewandeten Seite einer Sperrschicht (22a, 22b) angeordnet ist.

## Claims

1. Method for producing a coated packaging material (10), comprising at least the steps of:
a) providing a substrate (12) having a base material (14) of cellulose, an outside (16) to face away from a packaging good as well as an inside (18) to face the packaging good, wherein the base material is coated or uncoated paper, coated or uncoated cardboard, or coated or uncoated paperboard;
b) coating the inside (18) of the substrate with at least one layer of an aqueous composition including at least polyvinyl alcohol and a cross-linking agent and having a solid content of at most 25 % by wt., wherein as the cross-linking agent at least one alkyl orthosilicate and/or at least one olefinically saturated and/or unsaturated bi-, tri- or multi-functional compound, which can react with the hydroxy groups of the polyvinyl alcohol and includes at least two functional groups selected from carboxylic acid and acid anhydride, is used;
c) drying the layer and cross-linking the polyvinyl alcohol with the aid of the cross-linking agent with formation of a barrier layer (22a, 22b) for hydrophobic compounds.

2. Method according to claim 1,
**characterized in that**
an aqueous composition with a solid content between 3 % by wt. and 25 % by wt., in particular between 10 % by wt. and 22 % by wt., and/or a water content of at least 75 % by wt., in particular of at least 80 % by wt., is used.

3. Method according to any one of claims 1 or 2,
**characterized in that**
as the cross-linking agent tetraethyl orthosilicate, malonic acid, glutaric acid, adipic acid, citric acid, butanetetracarboxylic acid, maleic acid, polyacrylic acid, polyalkylacrylic acid, in particular polymethacrylic acid and/or polyethylacrylic acid, and/or any mixtures hereof and/or a polymerizate hereof and/or a copolymerizate hereof is used.

4. Method according to any one of claims 1 to 3,
**characterized in that**
an aqueous composition is used, which includes between 0.01 and 55 parts by weight of cross-linking agent related to 100 parts by weight of polyvinyl alcohol and/or between 1 and 60 parts by weight of a filler and/or a pigment related to 100 parts by weight of polyvinyl alcohol.

5. Method according to claim 4,
**characterized in that**
a filler and/or a pigment are used, which are acid-stable and/or have at least substantially spherical and/or platelet-shaped particle geometries.

6. Method according to any one of claims 1 to 5,
**characterized in that**
the aqueous composition is applied to the substrate (12) such that an area-related dry mass between 1 g/m² and 20 g/m², in particular between 3 g/m² and 15 g/m², results and/or that the aqueous composition is applied to the substrate (12) such that the layer has a wet film thickness between 1 µm and 1000 µm, in particular between 10 µm and 200 µm.

7. Method according to any one of claims 1 to 6,
**characterized in that**
the aqueous composition is applied to the substrate (12) by means of an equalizing coating method, in particular by means of doctor blade, blade and/or film press, and/or by means of a contour coating method, in particular by means of casting, spraying, curtain coating and/or airbrush.

8. Method according to any one of claims 1 to 7,
**characterized in that**
the coated substrate (12) is dried by means of infrared irradiation and/or by means of convection and/or under UV irradiation in step c).

9. Method according to any one of claims 1 to 8,
**characterized in that**
a substrate (12) is provided in step a), which includes a base material (14), the outside (16) of which is provided with a conditioning layer and/or a covering layer.

10. Method according to any one of claims 1 to 9,
**characterized in that**
the substrate (12) is coated with a further composition after step c), wherein the further composition includes at least polyvinyl alcohol, has a solid content of at most 15 % by wt. and is free of cross-linking agents.

11. Packaging material (10) comprising:
- a substrate (12) having a base material (14) of cellulose, an outside (16) to face away from a packaging good as well as an inside (18) to face the packaging good, wherein the base material is coated or uncoated paper, coated or uncoated cardboard, or coated or uncoated paperboard; and
- a layer system (20) disposed on the inside (18) of the substrate (12) including at least one barrier layer (22a, 22b) for hydrophobic compounds,
**characterized in that**
the barrier layer (22a, 22b) on the inside (18) of the base material (14) includes polyvinyl alcohol, which is crosslinked by a cross-linking agent, wherein the cross-linking agent is at least one alkyl orthosilicate and/or at least one olefinically saturated and/or unsaturated bi-, tri-, or multi-functional compound reacting with the hydroxy groups of the polyvinyl alcohol and includes at least two functional groups selected from carboxylic acid and acid anhydride.

12. Packaging material (10) according to claim 11,
**characterized in that**
the barrier layer (22a, 22b) is at least predominantly composed of cross-linked polyvinyl alcohol.

13. Packaging material (10) according to claim 11 or 12,
**characterized in that**
the layer system (20) includes at least two barrier layers (22a, 22b) of cross-linked polyvinyl alcohol, wherein at least one barrier layer (22a, 22b) preferably includes at least one filler and/or at least one pigment.

14. Packaging material (10) according to claim 13,
**characterized in that**
the at least two barrier layers (22a, 22b) include polyvinyl alcohols with different cross-linking levels and/or polyvinyl alcohols with different degrees of hydrolysis and/or polyvinyl alcohols cross-linked with different cross-linking agents.

15. Packaging material (10) according to any one of claims 11 to 14,
**characterized in that**
the layer system (20) includes at least one layer (24), which contains non-cross-linked polyvinyl alcohol, wherein the layer (24) containing non-cross-linked polyvinyl alcohol is disposed between two barrier layers (22a, 22b) and/or on a side of a barrier layer (22a, 22b) facing away from the base material (14).

## Revendications

1. Procédé de fabrication d'un matériau d'emballage revêtu (10), comprenant au moins les étapes suivantes :
a) la préparation d'un substrat (12), qui comprend un matériau de base (14) en cellulose, un côté extérieur (16) destiné à être orienté dans la direction opposée à un produit emballé, ainsi qu'un côté intérieur (18) destiné à être orienté vers le produit emballé, le matériau de base étant un papier enduit ou non enduit, un carton enduit ou non enduit, ou un papier cartonné enduit ou non enduit ;
b) le revêtement du côté intérieur (18) du substrat avec au moins une couche d'une composition aqueuse, qui comprend au moins de l'alcool polyvinylique et un agent de réticulation, et présente une teneur en solides d'au plus 25 % en poids, au moins un orthosilicate d'alkyle et/ou au moins un composé bi-, tri- ou multifonctionnel oléfiniquement saturé et/ou insaturé, qui peut réagir avec les groupes hydroxy de l'alcool polyvinylique et comprend au moins deux groupes fonctionnels choisis parmi un acide carboxylique et un anhydride d'acide, étant utilisé en tant qu'agent de réticulation ;
c) le séchage de la couche et la réticulation de l'alcool polyvinylique à l'aide de l'agent de réticulation avec formation d'une couche de barrière (22a, 22b) pour les composés hydrophobes.

2. Procédé selon la revendication 1, **caractérisé en ce qu'**une composition aqueuse ayant une teneur en solides comprise entre 3 % en poids et 25 % en poids, notamment entre 10 % en poids et 22 % en poids, et/ou ayant une teneur en eau d'au moins 75 % en poids, notamment d'au moins 80 % en poids, est utilisée.

3. Procédé selon l'une quelconque des revendications 1 ou 2, **caractérisé en ce que** de l'orthosilicate de tétraéthyle, de l'acide malonique, de l'acide glutarique, de l'acide adipique, de l'acide citrique, de l'acide butane-tétracarboxylique, de l'acide maléique, de l'acide polyacrylique, de l'acide polyalkylacrylique, notamment de l'acide polyméthacrylique et/ou de l'acide polyéthylacrylique, et/ou un mélange quelconque de ceux-ci et/ou un polymère et/ou un copolymère de ceux-ci est utilisé en tant qu'agent de réticulation.

4. Procédé selon l'une quelconque des revendications 1 à 3, **caractérisé en ce qu'**une composition aqueuse est utilisée, qui comprend pour 100 parties en poids d'alcool polyvinylique entre 0,01 et 55 parties en poids d'agent de réticulation et/ou qui comprend pour 100 parties en poids d'alcool polyvinylique entre 1 et 60 parties en poids d'une charge et/ou d'un pigment.

5. Procédé selon la revendication 4, **caractérisé en ce qu'**une charge et/ou un pigment est utilisé, qui est stable aux acides et/ou présente des géométries de particules au moins essentiellement sphériques et/ou plaquettaires.

6. Procédé selon l'une quelconque des revendications 1 à 5, **caractérisé en ce que** la composition aqueuse est appliquée sur le substrat (12) de manière à obtenir une masse sèche relative à la surface comprise entre 1 g/m² et 20 g/m², notamment comprise entre 3 g/m² et 15 g/m², et/ou **en ce que** la composition aqueuse est appliquée sur le substrat (12) de telle sorte que la couche présente une épaisseur de film humide comprise entre 1 µm et 1 000 µm, notamment entre 10 µm et 200 µm.

7. Procédé selon l'une quelconque des revendications 1 à 6, **caractérisé en ce que** la composition aqueuse est appliquée sur le substrat (12) par un procédé d'enduction égalisant, notamment au moyen d'une racle, d'une lame et/ou d'une presse à film, et/ou par un procédé d'enduction à contour, notamment par coulage, pulvérisation, revêtement au rideau et/ou lame d'air.

8. Procédé selon l'une quelconque des revendications 1 à 7, **caractérisé en ce que** le substrat revêtu (12) est séché à l'étape c) par exposition à un rayonnement infrarouge et/ou par convection et/ou par exposition à un rayonnement UV.

9. Procédé selon l'une quelconque des revendications 1 à 8, **caractérisé en ce qu'**à l'étape a), un substrat (12) est préparé, qui comprend un matériau de base (14), dont le côté extérieur (16) est muni d'une couche de conditionnement et/ou d'une couche de recouvrement.

10. Procédé selon l'une quelconque des revendications 1 à 9, **caractérisé en ce que** le substrat (12) est revêtu après l'étape c) avec une composition supplémentaire, la composition supplémentaire comprenant au moins de l'alcool polyvinylique, présentant une teneur en solides d'au plus 15 % en poids et étant exempte d'agents de réticulation.

11. Matériau d'emballage (10), comprenant :
- un substrat (12), qui comprend un matériau de base (14) en cellulose, un côté extérieur (16) destiné à être orienté dans la direction opposée à un produit emballé, ainsi qu'un côté intérieur (18) destiné à être orienté vers le produit emballé, le matériau de base étant un papier enduit ou non enduit, un carton enduit ou non enduit, ou un papier cartonné enduit ou non enduit ; et
- un système de couches (20) agencé sur le côté intérieur (18) du substrat (12), comprenant au moins une couche de barrière (22a, 22b) pour les composés hydrophobes,
**caractérisé en ce que** la couche de barrière (22a, 22b) sur le côté intérieur (18) du matériau de base (14) comprend de l'alcool polyvinylique, qui est réticulé au moyen d'un agent de réticulation, l'agent de réticulation étant au moins un orthosilicate d'alkyle et/ou au moins un composé bi-, tri- et/ou multifonctionnel oléfiniquement saturé et/ou insaturé, qui réagit avec les groupes hydroxy de l'alcool polyvinylique et comprend au moins deux groupes fonctionnels choisis parmi un acide carboxylique et un anhydride d'acide.

12. Matériau d'emballage (10) selon la revendication 11, **caractérisé en ce que** la couche de barrière (22a, 22b) est constituée au moins en majorité d'alcool polyvinylique réticulé.

13. Matériau d'emballage (10) selon la revendication 11 ou 12, **caractérisé en ce que** le système de couches (20) comprend au moins deux couches de barrière (22a, 22b) en alcool polyvinylique réticulé, au moins une couche de barrière (22a, 22b) comprenant de préférence au moins une charge et/ou au moins un pigment.

14. Matériau d'emballage (10) selon la revendication 13, **caractérisé en ce que** lesdites au moins deux couches de barrière (22a, 22b) comprennent des alcools polyvinyliques présentant des degrés de réticulation différents et/ou des alcools polyvinyliques présentant des degrés d'hydrolyse différents et/ou des alcools polyvinyliques réticulés avec des agents de réticulation différents.

15. Matériau d'emballage (10) selon l'une quelconque des revendications 11 à 14, **caractérisé en ce que** le système de couches (20) comprend au moins une couche (24), qui contient de l'alcool polyvinylique non réticulé, la couche contenant l'alcool polyvinylique non réticulé (24) étant agencée entre deux couches de barrière (22a, 22b) et/ou sur un côté d'une couche de barrière (22a, 22b) opposé au matériau de base (14).
